# EUROPEAN PATENT APPLICATION

(11) **EP 2 218 979 A1**
(43) Date of publication of application: **18.08.2010**
(21) Application number: 08834248.0
(22) Date of filing: 24.09.2008
(51) Int. Cl.: F24J 2/20, F24J 2/46, E04D 3/24

(54) **ARCHITECTURAL CLOSURE PANEL THAT COLLECTS SOLAR ENERGY AND A MOVABLE SOLAR ENERGY COLLECTOR ROOF**

(30) Priority: 24.09.2007 ES 200702501; 25.02.2008 ES 200800519
(71) Applicant: Petra Inventum, S.L., 08174 Sant Cugat del Valles (Barcelona) (ES)
(72) Inventor: Petra Inventum, S.L., 08174 Sant Cugat del Valles (Barcelona) (ES)
(74) Representative: Gislon, Gabriele
(86) International application number: PCT/ES2008/000601
(87) International publication number: WO 2009/040454

(57) **Abstract**

The invention relates to a solar energy-collecting architectural enclosure panel and a walkable solar energy-collecting roof. The panel comprises outer and inner plates (1, 2) which are mutually facing and joined by a leak-tight joint along a closed perimeter (7) separated at a distance from perimetric edges of the panel. The outer and inner plates (1, 2) include within the closed perimeter (7) hollow conformations (3, 4) to form a circuit for a heat-carrying fluid with an inlet and an outlet. Adjacent to opposite longitudinal edges of the outer plate (1) there are first longitudinal stiffening configurations and adjacent to opposite longitudinal edges of the inner plate (2) there are second longitudinal stiffening configurations configured to rest on transverse elements of a structure. The outer and inner plates (1, 2) are furthermore joined by a mechanical connection (9) in expected maximum bending stress areas adjacent to said opposite longitudinal edges of the outer and inner plates (1, 2).

## Description

### Technical Field

The present invention generally relates to a solar energy-collecting architectural enclosure panel, applicable to a roof and to a façade, and more particularly to a solar energy-collecting architectural enclosure panel formed from two shaped plates facing one another, joined along a leak-tight joint line and provided with additional mechanical connections to form a panel suitable for advantageously forming part of a walkable solar energy-collecting roof, although it is also suitable for other types of enclosures.

The present invention also relates to a walkable solar energy-collecting roof provided with an air chamber at the lower part, which can be closed or communicated with the outside or with an inner heating air pipeline of a building in which the cover is installed.

### Background of the Invention

International patent application WO2004083556, the inventor of which is the current applicant, discloses a multifunctional element which is used to form a roof, comprising inner and outer sheets facing one another and joined together along a closed perimeter. The mentioned sheets define within said closed perimeter hollow conformations forming a circuit for a heat-carrying fluid, with an inlet and an outlet. The inner and outer sheets are joined by a perforation-free cold deformation process of localized areas of both sheets, known as "clinching", and the leak-tightness of the closed perimeter is provided by a gasket arranged between the two sheets.

Patent US-A-4010733, of Moore, describes a solar collector suitable for forming part of a roof of a building. This solar collector is formed from two plates facing one another, an inner one and another outer one, joined by a leak-tight joint line along a closed perimeter, and provided with hollow conformations within said closed perimeter to form a circuit for a heat-carrying fluid with an inlet and an outlet. Fins extend from longitudinal edges of the outer plate, which fins act as supports for one or more panes of glass covering the outer surface of the outer plate for the purpose of forming one or more layers of air capable of retaining the heat generated by solar radiation. The outer fins are also used to establish leak-tight joints between adjacent collectors by means of joint-covering profiles. Flaps extend from longitudinal edges of the inner plate, which flaps are finished in respective folded portions extending towards one another. The inner surfaces of the inner plate and the flaps, as well as the inner and outer surfaces of the folded portions are coated with a layer of insulating material.

However, the mentioned patent US-A-4010733 has several drawbacks. Firstly, a roof formed by a plurality of such collectors would not be walkable, for example, for maintenance, due to the brittleness of the panes of glass forming the air chamber on the outer surface. Even if the panes of glass were uninstalled before accessing the roof, an operator would be obliged to step on the hollow conformations forming the circuit for the heat-carrying fluid with the risk of crushing them, since said conformations occupy the entire extension of the outer plate between its longitudinal edges. In addition, supposing that panes of glass that are strong enough to be walkable are used for the outer air chamber, the roof would have practical viability problems due to the additional weight and to the high cost of such walkable panes of glass. Secondly, the solar collector of patent US-A-4010733 does not have transverse reinforcing members to ensure the walkability of the roof, and furthermore, the layer of insulating material coating the outer surfaces of the folded portions makes the collector rest on the insulating material when the collector is installed on the transverse elements of the structure of the building, and such collector can be crushed, for example, by the weight of the maintenance operator.

Patent EP-A-1715261, of which the current applicant is co-inventor, contributes to solving the previous drawbacks by providing a solar energy-collecting modular element formed from an inner plate and an outer plate facing one another, joined by a leak-tight joint line along a closed perimeter, and provided with hollow conformations within said closed perimeter to form a circuit for a heat-carrying fluid with an inlet and an outlet. The outer surface of the outer plate is directly exposed to solar radiation, since priority has been given to the convenience and economy of manufacture, installation and maintenance over the efficiency taking into account the large surface exposed to solar radiation which is generally available both in façades and in roofs of buildings. Fins extend from the longitudinal edges of the outer plate, which fins serve to establish leak-tight joints between adjacent modular elements. The mentioned closed perimeter forming the circuit for the heat-carrying fluid is separated at a sufficient distance from the perimetric edges of the outer and inner plates for the purpose of leaving passages free of hollow conformations on which-the operators can place their feet to walk on the roof. Flaps extend from longitudinal edges of the inner plate, which flaps are finished in respective folded portions extending towards one another forming facing channels, and transverse reinforcing members are arranged under the inner plate with their ends fitted in said channels. Parts of insulating material are arranged under the inner plate filling the spaces between the transverse reinforcing elements and with their end edges fitted in the same channels. The modular element is thus transversely reinforced against bending and the folded portions of the flaps are supported directly on the transverse elements of the structure of the building, which favors walkability with a low cost when the modular elements are used, for example, to form a roof.

Nevertheless, the modular element of the mentioned patent EP-A-1715261 has a drawback consisting of the fact that the main mechanical connection between the inner and outer plates is the leak-tight joint line forming the closed perimeter of the circuit for the heat-carrying fluid, and, due to the distance between this closed perimeter and the opposite longitudinal edges of the inner and outer plates, when the modular element is subjected to bending stress in the longitudinal direction, the plates tend to bend and separate in the maximum bending stress areas adjacent to said longitudinal edges of the outer and inner plates.

### Disclosure of the Invention

According to a first aspect, the present invention contributes to solving the previous and other drawbacks by providing a solar energy-collecting architectural enclosure panel, applicable to a roof and to a façade, of the type comprising an outer plate and an inner plate which are mutually facing and joined by a leak-tight joint line along a closed perimeter separated at a distance from perimetric edges of said outer and inner plates. In at least one of said outer and inner plates there are formed one or more hollow conformations to form between both a circuit for a heat-carrying fluid within said closed perimeter, said circuit having an inlet and an outlet. Adjacent to opposite longitudinal edges of the outer plate there are first longitudinal stiffening configurations and adjacent to opposite longitudinal edges of the inner plate there are second longitudinal stiffening configurations, which are configured to rest on transverse elements of a structure. The panel of the present invention is **characterized in that** the outer and inner plates are furthermore joined by at least one mechanical connection in a expected maximum bending stress area adjacent to at least one of said opposite longitudinal edges of the outer and inner plates.

With this construction, the mentioned distance between said leak-tight joint line forming the closed perimeter and the opposite longitudinal edges of the outer and inner plates provides a passage free of hollow conformations with a sufficient width to allow placing at least one foot, while at the same time the mentioned mechanical connection between the outer and inner plates ensures that the two outer and inner plates both act together as structural elements to withstand, for example, at least the weight of an operator walking on solar energy-collecting architectural enclosure panels according to the present invention when they are used, for example, to form a roof. Given that a roof will generally be formed by a plurality of adjacent panels, an operator may walk relatively comfortably on the roof placing his feet in the passages of the adjacent panels. Thus, due to-the additional-mechanical connection between the inner and outer plates of the panel, a designer can take into account the combined strength of the inner and outer plates of the panel, including their respective stiffening configurations, to calculate the bending strength of the panel.

The mentioned maximum bending stress area potentially occurs in the central area of the panel when, for example, a panel is supported at its ends on transverse elements of the structure and a load is applied in a central area thereof. Therefore, the mechanical connection between the outer and inner plates will conventionally be located in the central areas of the panel adjacent to the opposite longitudinal edges of the outer and inner plates. The outer and inner plates are generally metal plates made of steel, zinc, or aluminium, among others, and the mechanical connection can be made by means of any one of the large variety of techniques for joining metal plates. For example, on each side of the panel, the mechanical connection can comprise a weld point or several aligned weld points, a weld bead or several aligned short weld lines, a clinching point or several aligned clinching points, a screw and nut set connection point or several aligned screw and nut set connection points, a rivet connection point or several aligned rivet connection points, etc. When screw and nut set or rivet joints are used it is convenient to use rubber washers to make the holes necessary for their installation leak-tight. When weld beads or aligned short joint lines or points are used, an attempt will be made so that the central joint area covers an approximate length of 1/10 to 1/3 of the total length of the panel, although there is no drawback to covering more reduced or wider areas, even the entire length of the panel, it is believed to be suitable. Likewise, when the maximum bending stress areas for each particular panel are known from an architectural project, the mechanical connections can be made individually in each panel according to said project.

The enclosure panels must be fixed to a support structure, for example, to counteract a suction force generated by the wind and other forces which tend to lift or move the enclosure panels when they are used both in walls and in roofs. According to one embodiment of the present invention, the fixing is resolved without needing additional parts outside the enclosure panel but rather by means of fixing configurations formed in some of the components forming the panel, following the criterion of attempting to make each element forming the panel be able to perform several functions at the same time. More specifically, the mentioned fixing configurations are formed as projections of transversely arranged transverse stiffening members adjacent to the inner plate of the panel, which on this occasion are made of sheet material, and preferably of sheet metal material. These transverse stiffening members made of sheet metal have a laterally open channel shape and are capable of receiving and supporting opposite ends of an insulating material element arranged under the inner plate. The transverse stiffening members thus perform several functions. Firstly, they act as bearing elements capable of diverting the loads caused by the use and maintenance operations on the outer plate of the panel towards the longitudinal stiffening configurations adjacent to the longitudinal edges of the outer and inner plates of the panel. In addition, they contribute to framing, supporting and retaining the insulating material elements adjacent to the lower face of the inner plate, and furthermore provide the mentioned fixing configurations.

One embodiment proposes shaping the transverse stiffening members from cut and folded sheet metal material to form C-shaped profiles which are subsequently integrated in the rest of the panel formed by the outer and inner plates, either by welding or by another mechanical connection, and to form at ends of said C-shaped profiles fins projecting from the side limits of the panel and which can be fixed to the support structure also by means of a mechanical connection. When it is not in use, the mentioned fin can be folded upwardly and placed against the outer face of the corresponding flap of the inner plate for the purpose of facilitating the packaging and transport of the enclosure panel. At the time of the on-site installation, an operator can unfold those fins of the panel that he considers necessary according to a process of assembly and/or of calculation of stresses to ensure that the enclosure panel is secured to the support structure, and the unfolded fins can be fixed by means of screws or another mechanical joining means to the support structure. Those fins which have not been considered necessary can remain folded without interfering in the installation of other adjoining panels. The mentioned fins can preferably have one or more holes previously made in the factory to facilitate the introduction of screws or other securing elements, although alternatively the mentioned holes can be made at the time of the on-site installation.

According to a second aspect, the present invention provides a walkable solar energy-collecting roof, which is formed by at least one solar energy-collecting architectural enclosure panel according to the first aspect of the present invention supported on transverse elements of a structure, for example, of a building. The roof of the present invention is **characterized in that** it includes an air chamber formed by at least one insulating board supported under said solar energy-collecting architectural enclosure panel by at least one support element. This support element comprises a spacing member having an upper end and a lower end. From the mentioned upper end there extends laterally at least one fin configured to be inserted between the outer and inner plates of the solar energy-collecting architectural enclosure panel in an area adjacent to one of its opposite longitudinal edges, and said lower end has joined thereto a support configuration configured to support said insulating board.

The roof of the present invention comprises a plurality of panels according to the first aspect of the present invention which are arranged mutually adjacent, both in the longitudinal and in the transverse direction, supported on the transverse elements of the structure, and connected to one another establishing leak-tight joints. The inlet and the outlet of the circuit of each panel can be connected to a general circuit for a heat-carrying fluid. In this case, the mentioned support element comprises preferably two of said fins extending in opposite directions from the upper end of the corresponding spacing member. The fins are configured to be inserted between the outer and inner plates of two adjacent panels from their respective longitudinal edges. The mechanical connections between the upper and lower plates will obviously leave free sections to allow the insertion of the fins of the support elements. The roof of the present invention also generally comprises a plurality of the mentioned insulating boards supported under the panels by a plurality of support elements. Preferably, the insulating boards have dimensions coinciding with the dimensions of the panels, and the mentioned support configuration of each support element is configured to support two of said adjacent insulating boards.

The air chamber thus formed under the panels forming the roof of the present invention can simply be a closed chamber. Optionally, however, when the mentioned structure is the structure of a closed building, the air chamber can be in communication with the outside of said building to facilitate a renewal of the heated air under the panels, or be in communication with an inner heating air pipeline of said building for the purpose of using the heated air under the panels as a heating means of the building. The roof of the present invention can optionally be associated with a valve or gate system to maintain the air chamber closed or switch the communication of the air chamber between the outside of the building and the heating air pipeline according to the weather, the season of the year, the inner temperature of the building, or other parameters or needs.

It must be stated that in the present description, the terms "longitudinal" and "transverse" are used in relation to the direction of a water flow foreseen on the panel or enclosure formed by multiple panels.

### Brief Description of the Drawings

The previous and other features and advantages will be more fully understood from the following detailed description of several embodiments with reference to the attached drawings, in which:
Figure 1 is a plan view of the outer side of a solar energy-collecting architectural enclosure panel according to one embodiment of the first aspect of the present invention;
Figure 2 is an enlarged cross section view, with some parts sectioned, taken through the plane indicated as II-II in Figure 1;
Figure 3 is a longitudinal section view, with some parts sectioned, taken through the plane indicated as III-III in Figure 1;
Figure 4 is a plan view of the inner side of the panel of Figure 1, with some parts sectioned;
Figure 5 is a perspective exploded view of components forming part of a solar energy-collecting architectural enclosure panel according to another embodiment of the first aspect of the present invention;
Figure 6 is a perspective view of the panel formed by the components of Figure 5 assembled;
Figure 7 is a perspective view illustrating the panel of Figure 6 fixed to elements of a support structure;
Figure 8 is a partial perspective view of a sheet metal element from which a transverse stiffening member forming part of the components of the panel can be obtained;
Figure 9 is a partial perspective view of an end of the transverse stiffening member in the form of a channel showing an open side thereof, with a fin extending from said end;
Figure 10 is a partial perspective view of an end of the transverse stiffening member in the form of a channel showing a closed side thereof, with-a fin extending from said end and a support configuration extending from said closed side;
Figure 11 is a partial cross section view taken through the plane indicated as XI-XI in Figure 6, showing the fin in a folded situation by means of solid lines and the fin in an extended situation by means of dotted lines; and
Figure 12 is a partial cross section view taken through the plane indicated as XII-XII in Figure 6;
Figure 13 is a simplified plan view of the outer side of a solar energy-collecting architectural enclosure panel according to yet another embodiment of the first aspect of the present invention;
Figure 14 is a cross section view taken through the plane indicated as XIV-XIV in Figure 13;
Figure 15 is an enlarged detail showing the assembly of two enclosure panels such as the one shown in Figures 13 and 14;
Figure 16 is a partial cross section view of a walkable solar energy-collecting roof according to one embodiment of the second aspect of the present invention;
Figure 17 is a plan view of a sheet metal blank for the formation of a support element applicable to the roof of Figure 16 according to one embodiment;
Figure 18 is a perspective view of the support element of Figure 17 in an operating situation;
Figure 19 is a plan view of a sheet metal blank for the formation of a support element applicable to the roof of Figure 16 according to another embodiment;
Figure 20 is a perspective view of the support element of Figure 19 in an operating situation;
Figure 21 is a partial cross section view of a roof of the present invention with a closed air chamber;
Figure 22 is a partial cross section view of a roof of the present invention with an air chamber communicated with the outside; and
Figure 23 is a partial cross section view of a roof of the present invention with an air chamber communicated with a heating air pipeline.

### Detailed Description of Exemplary Embodiments

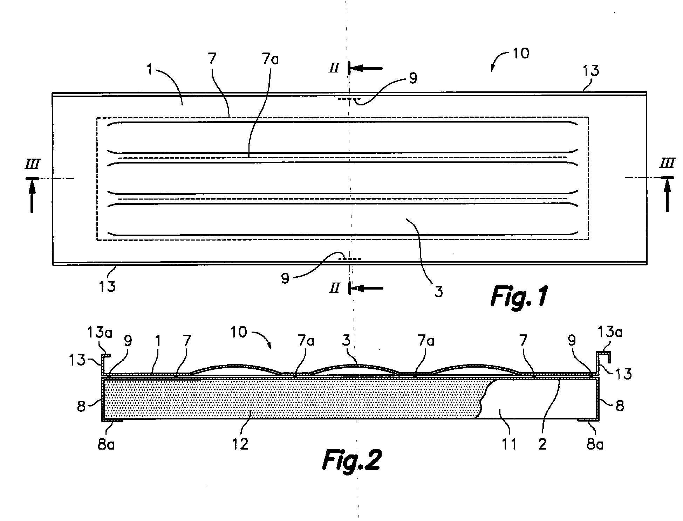

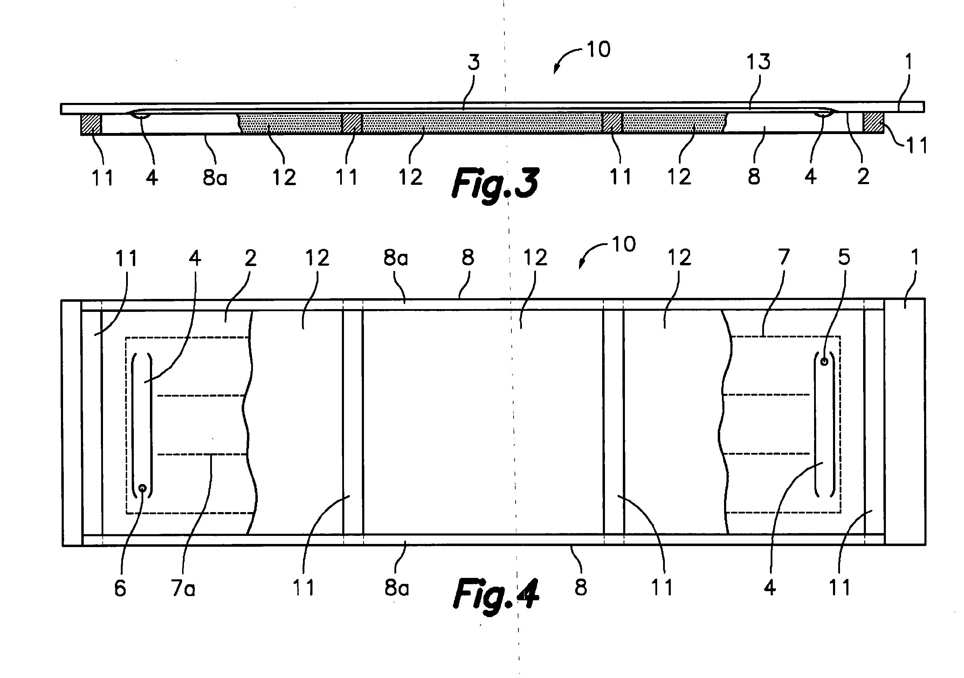

With reference first to Figures 1 to 4, the solar energy-collecting architectural enclosure panel according to the first aspect of the present invention is formed from an outer plate 1 and an inner plate 2 which are mutually facing and joined by a leak-tight joint line along a closed perimeter 7, which is separated at a predetermined distance from perimetric edges of said outer and inner plates 1, 2. The outer plate 1 has outwardly projecting hollow conformations 3 (Figures 1, 2 and 3) with a longitudinal configuration and the inner plate 2 has inwardly projecting hollow conformations 4 (Figures 3 and 4) with a transverse configuration. The mentioned hollow conformations 4 of the inner plate 2 are facing one another at the ends of the hollow conformations 3 of the outer plate 1 such-that between both they forma circuit for a heat-carrying fluid within said closed perimeter 7. The mentioned circuit has an inlet 5 and an outlet 6, for example, in the hollow conformations 4 of the inner plate 2. Preferably leak-tight auxiliary joint lines 7a are arranged between the hollow conformations 3 of the outer plate, which lines, however, are not connected at their ends with the leak-tight joint line of the closed perimeter 7 to allow an exchange of fluid between the longitudinal channels defined by the hollow conformations 3 of the outer plate 1a through the transverse channels defined by the hollow conformations 4 of the inner plate 2.

The outer plate 1 has first longitudinal stiffening configurations in the form of fins 13 extending towards the outer side of the panel from opposite longitudinal edges of the outer plate 1, and the inner plate 2 has second longitudinal stiffening configurations in the form of flaps 8 extending towards the inner side from opposite longitudinal edges of the inner plate 2. The outer and inner plates 1, 2 have substantially the same width and said fins 13 are substantially aligned with said flaps 8 on each side of the panel. On each side of the inner plate 2, the flaps 8 are finished in respective folded portions 8a extending towards one another defining respective facing channels in cooperation with the flaps 8 and the inner plate 2. The mentioned folded portions 8a are configured to rest on transverse elements of a structure (not shown in Figures 1 to 4). It will be understood, nevertheless, that alternatively the first and second stiffening configurations can have other shaped different from the fins 13 and flaps 8 with folded portions 8a without departing from the scope of the present invention.

Although it is not essential, the outer and inner plates 1, 2 are preferably of a metal material, such as steel, zinc or aluminium, and both of them are mainly joined by the leak-tight joint line of the closed perimeter 7 and the auxiliary joint lines 7a within the closed perimeter 7, which can be, for example, continuous weld lines. However, an essential feature of the panel of the present invention is that it has a mechanical connection 9 to additionally join the outer and inner plates 1, 2 at least in an expected maximum bending stress area adjacent to at least one of said opposite longitudinal edges of the outer and inner plates 1, 2. The panel preferably includes mechanical connections 9 in the expected maximum bending stress areas adjacent to the two opposite longitudinal edges of the outer and inner plates 1, 2, on both sides of the panel. The mechanical connections 9 are thus separated from the leak-tight joint line of the closed perimeter 7 and close to the stiffening configurations formed by the fins 13 and flaps 8 of the outer and inner plates 1, 2, respectively, such that both the outer and inner plates 1, 2 work as structural elements and the fins 13 and the flaps 8 cooperate with one another to form a profile with high bending strength. Advantageously, between said leak-tight joint line of the closed perimeter 7 and the opposite longitudinal edges of the outer and inner plates 1, 2 there is a sufficient distance to at least place a foot, such that the panel has passages free of hollow conformations 3 in which the operators can place their feet to walk thereon when the panel is used to form a walkable roof. Alternatively, the panel of the present invention is likewise applicable to the formation of façades.

Given that the mechanical connections 9 do not need to be leak-tight, they can be made in a relatively easy and cost-effective manner by a variety of well known techniques, including a single weld point, several aligned weld points, a continuous weld bead, several aligned short weld lines, a clinching point, several aligned clinching points, a screw and nut set connection point, several aligned screw and nut set connection points, a rivet connection point, or several aligned rivet connection points, etc. Figure 1 shows the mechanical connections 9 located in the middle area in the longitudinal direction of the panel, which is the expected maximum bending stress area when the panel is supported at its ends on transverse elements of a structure. However, the mechanical connections 9 could be located in other areas or in several areas along the panel if the installation of a particular panel requires it.

As shown in Figures 2, 3 and 4, the solar energy-collecting panel of the present invention includes several transversally arranged elongated transverse stiffening members 11 adjacent to the inner plate 2. Each of these transverse stiffening members 11 has opposite ends fitted in the mentioned facing channels formed by the inner plate 2, the flaps 8 and their folded portions 8a. In the embodiment shown, at the inner part of the panel there are arranged four of said transverse stiffening members 11 in the form of bars with a substantially rectangular cross section, for example solid bars of wood, although alternatively they could be hollow profiles of metal or of another material. Two of the transverse stiffening members 11 are arranged at the ends of the inner plate 2 and the other two are arranged in equidistant intermediate positions. The spaces between every two transverse stiffening members 11 are filled by insulating material elements 12, which have opposite ends fitted in the facing channels formed by the inner plate 2, the flaps 8 and their folded portions 8a. The mentioned insulating material elements 12 preferably have lower surfaces flush with lower surfaces of the transverse stiffening members 11, and both of them are coated with a finishing plate (not shown).

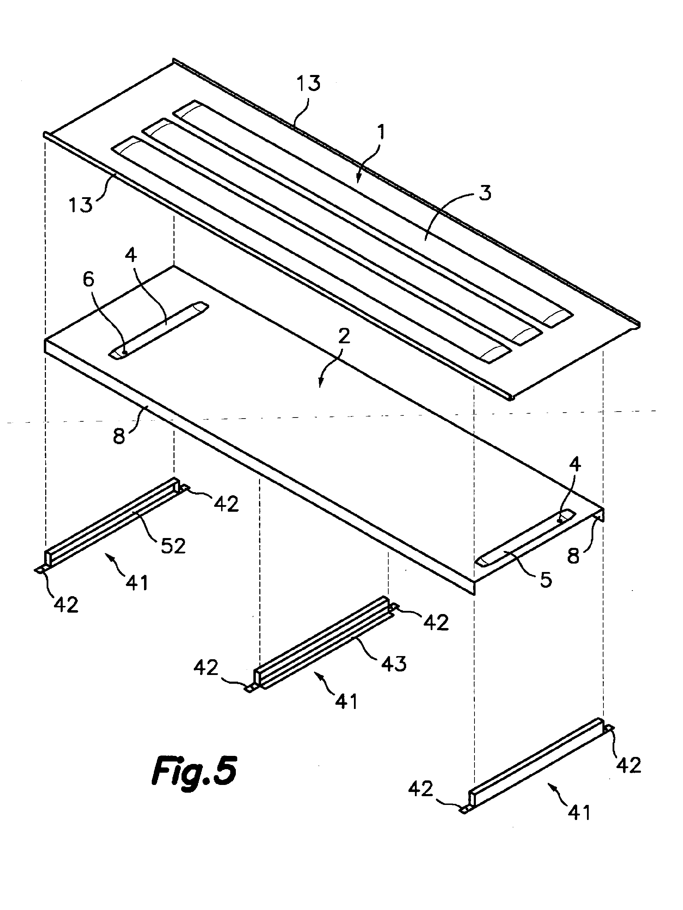

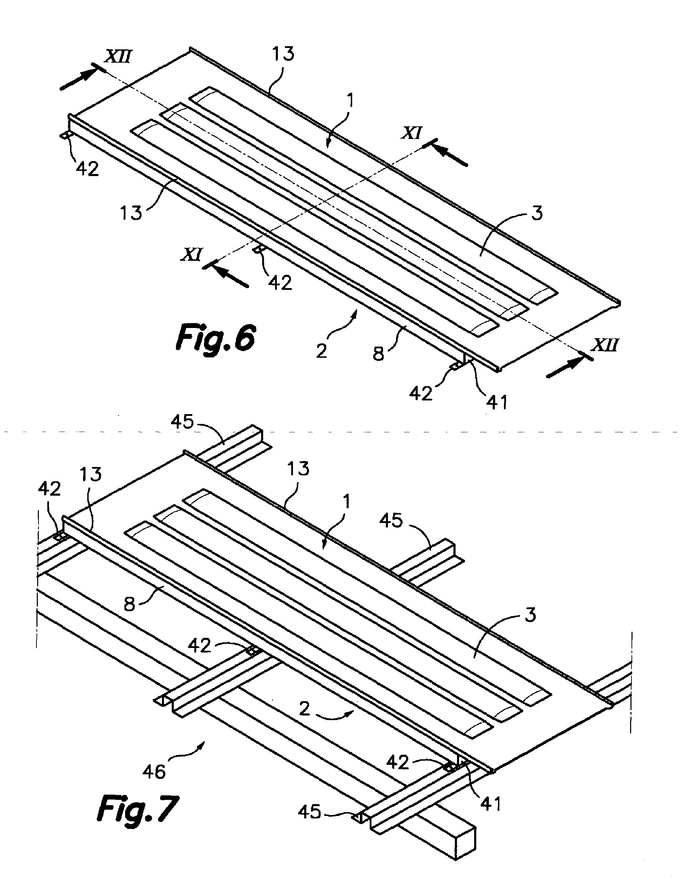

With reference now to Figure 5, it shows the main elements from which the solar energy-collecting architectural enclosure panel according to one embodiment of the present improvements is formed. The mentioned main elements comprise an outer plate 1, an inner plate 2 and several transverse stiffening members 41, all of them made of sheet material, generally although not essentially of a sheet metal material such as, for example, of steel, zinc or aluminium, among others. Once the panel is assembled, as shown in Figure 6, the outer and inner plates 1, 2 are mutually facing and joined by a leak-tight joint line along a closed perimeter surrounding hollow conformations 3 formed in the outer plate 1 and other hollow conformations 4 formed in the inner plate 2. These hollow conformations 3, 4 are partially superimposed and communicated with one another in order to together form a circuit for a heat-carrying fluid within said closed perimeter, with an inlet 5 and an outlet 6 (Figure 5). The outer and inner plates 1, 2 are furthermore joined by mechanical connections in expected maximum stress areas, as previously explained. The outer plate 1 has fins 13 extending towards the outer side from its opposite longitudinal edges, and the inner plate 2 has flaps 8 extending towards the inner side from its opposite longitudinal edges.

The transverse stiffening members 41 are elongated and are transversely arranged adjacent to the inner plate 2 between the flaps 8, and have opposite ends respectively adjacent to and facing the flaps 8. The enclosure panel preferably includes two of-said transverse stiffening members 41 located at opposite ends of the inner plate 8 and optionally one or more intermediate transverse stiffening members 41, depending on the length and/or on the installation conditions of the enclosure panel. The transverse stiffening members 41 are fixed to the inner plate 2 by a mechanical connection, for example, by welding, by an adhesive, or by means of screws or rivets.

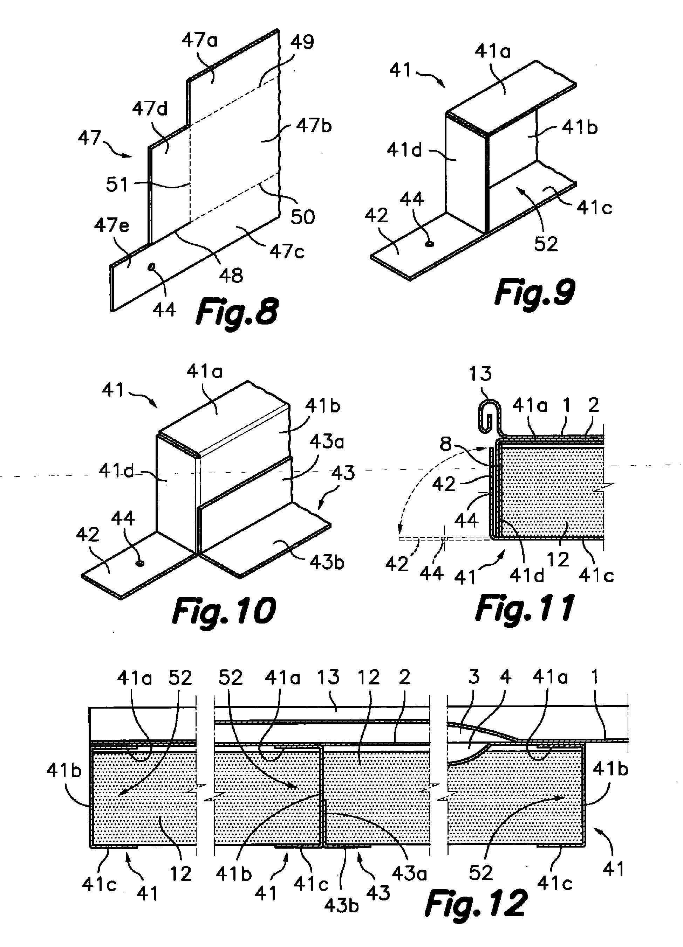

In the event that heat and/or sound insulation features are required, in a space available between every two transverse stiffening members 41 there is arranged at least one insulating material element 12 (partially shown in Figures 11 and 12) in the form of a board with a thickness approximately equal to or slightly less than the height of the flaps 8.

Fixing configurations in the form of fins 42 extend from the ends of the transverse stiffening members 41, which fins are integral with the sheet metal of which the corresponding transverse stiffening member 41 is made. Once the panel is assembled, as shown in Figure 6, the mentioned fins 42 project laterally outwards under the corresponding flaps 8 of the inner plate 2 and beyond the outer side limits of the flaps 8. As shown in Figure 7, the fins 42 are configured for the purpose of being fixed to an element 45 of a support structure 46 by mechanical joining means, such as welding, screws, rivets, etc., whereby the enclosure panel is secured to said support structure 46. It must be stated that although the fins 42 as integral extensions of the transverse stiffening members 41 are a particularly advantageous embodiment of the present invention, the fins could alternatively be formed, for example, as integral extensions of the flaps 8 and folded outwardly without departing from the scope of the present invention.

For another embodiment, between the fins 42 and the elements 45 of the support structure 46 shown in Figure 7, there are laminar elements (not shown) acting as heat and sound insulators.

Figure 8 shows an end of a sheet metal element 47 from which one of the transverse stiffening members 41 can be obtained. The mentioned sheet metal element 47 is elongated and has stepped cutouts at the said end. One of the stepped cutouts is prolonged in a cut 48 parallel to longitudinal edges of the sheet metal element 47. Furthermore, longitudinal fold lines 49, 50 and a transverse fold line 51 delimiting sheet metal portions 47a, 47b, 47c and 47d are indicated on the sheet metal element 47.

Once the sheet metal element 47 is folded through said longitudinal fold lines 49, 50, the main body of the transverse stiffening member 41 partially shown in Figure 9 is obtained, which body is a one-piece body of cut and folded sheet metal, configured as a C-shaped profile with an upper wall 41 a, a side wall 41 b and a lower wall 41c formed respectively by the mentioned sheet metal portions 47a, 47b, 47c of the sheet metal element 47. The mentioned upper, side and lower walls 41a, 41b, 41c form an open channel 52, and the sheet metal portion 47d of the sheet metal element 47, once folded through the transverse fold line 51, forms an end wall 41d closing said channel 52 at an end thereof. At the opposite end (not shown) of the transverse stiffening member 41, the channel 52 is closed similarly by means of another corresponding end wall 41d. As has been mentioned above, the transverse stiffening member 41 includes the fins 42, which are formed by prolongations of the lower wall 41c at the ends thereof. Each fin 42 includes at least one hole 44 to facilitate the installation of a fixing element such as a screw or rivet. This hole 44 can be advantageously made in a portion 47e of the sheet element 47 which will form the fin 42 in the transverse stiffening member 41.

The transverse stiffening member 41 is arranged in the enclosure panel with the upper wall 41a joined to the inner plate 2, with the laterally open channel 52 and, if possible, facing the channel 52 of another one of the transverse stiffening members 41 joined to the inner plate 2. The channels 52 of the transverse stiffening members 41 are dimensioned to receive and support the ends of the mentioned insulating material elements 12, as shown in Figures 11 and 12. The transverse stiffening member 41 shown in Figure 9 is suitable for being located at the ends of the lower plate 2 of the enclosure panel. However, when the enclosure panel includes one or more intermediate transverse stiffening members 41, as is the case of the embodiment shown in the figures, the channel 52 of an intermediate transverse stiffening member 41 can only be facing the channel 52 of one of the two transverse stiffening members 41 flanking it. For this reason, and as shown in Figure 10, each intermediate transverse stiffening member 41 includes a support configuration 43 extending in a direction opposite to the channel 52 formed by it. This support configuration 43 is located and dimensioned to support an end of an insulating material element 12. In the embodiment shown, the support configuration 43 is formed by an L-shaped profile having a side wall 43a joined to a surface of the side wall 41b opposite to the channel 52 and a lower wall 43b substantially coplanar with the lower wall 41c of the channel 52 and arranged on the side opposite thereto.

According to one embodiment, the fins 42 are configured, according to the nature and the thickness of the sheet metal from which the transverse stiffening member 41 is formed, so that they can be folded upwardly and placed against an outer face of the corresponding flap 8 of the inner plate 2, as shown by means of solid lines in Figure 11, for the purpose of facilitating the packaging and the transport of the enclosure panel. At the time of the installation, the fins 42 can be easily unfolded to an operating position (shown by means of dotted lines in Figure 11) to allow fixing the enclosure panel to the support structure 46. It is furthermore possible to unfold only those fins 42 which are considered necessary for fixing the enclosure panel to the support structure 46 and leaving the remaining fins 42 in the folded position without them interfering in the placement of the neighboring enclosure panels.

Figure 12 shows a partial cross section view taken through the plane indicated as XII-XII in Figure 6. The enclosure panel of Figure 6 includes two end transverse stiffening members 41, such as the one shown in Figure 9, and an intermediate transverse stiffening member 41, such as the one shown in Figure 10. The channel 52 of the intermediate transverse stiffening member 41 faces the channel 52 of one of the end transverse stiffening members 41 to support an insulating material element 12 between both, whereas the support configuration 43 of the intermediate transverse stiffening member 41 faces the channel 52 of the other one of the end transverse stiffening members 41 to support another insulating material element 12 between both. The insulating material element 12 generally occupies substantially the entire space available between two transverse stiffening members 41 and the two flaps 8 of the lower plate. Alternatively, several narrower insulating material elements-12 could be arranged between two transverse stiffening members 41, the width of which elements being substantially equal to the distance between the flaps 8 of the lower plate 2.

In another embodiment (not shown), the enclosure panel includes more than one intermediate transverse stiffening member 41, and, in this case, the channel 52 of each intermediate transverse stiffening member 41 can face either the channel 52 of one of the end transverse stiffening members 41 or the channel 52 or the support configuration 43 of another one of the intermediate transverse stiffening members 41 to support between both one or more insulating material elements 12. Similarly, the support configuration 43 of each intermediate transverse stiffening member 41 can face either the channel 52 of one of the end transverse stiffening members 41 or the channel 52 or the support configuration 43 of another one of the intermediate transverse stiffening members 41 to support between both one or more insulating material elements 12.

In another embodiment (not shown), the enclosure panel comprises only the two end transverse stiffening members 41 arranged with their respective channels 52 facing one another to support between both one or more insulating material elements 12.

It will be understood that each insulating material element 12 can be arranged with its two ends inserted and supported in the facing channels 52 of two transverse stiffening members 41 or with an end inserted and supported in the channel 52 of a transverse stiffening member 41 and the other end simply supported in the support configuration 43 of another transverse stiffening member 41. In any case, the movements of the insulating material element 12 are restricted by the transverse stiffening members 41 and furthermore by the inner plate 2 and by the flaps 8 thereof.

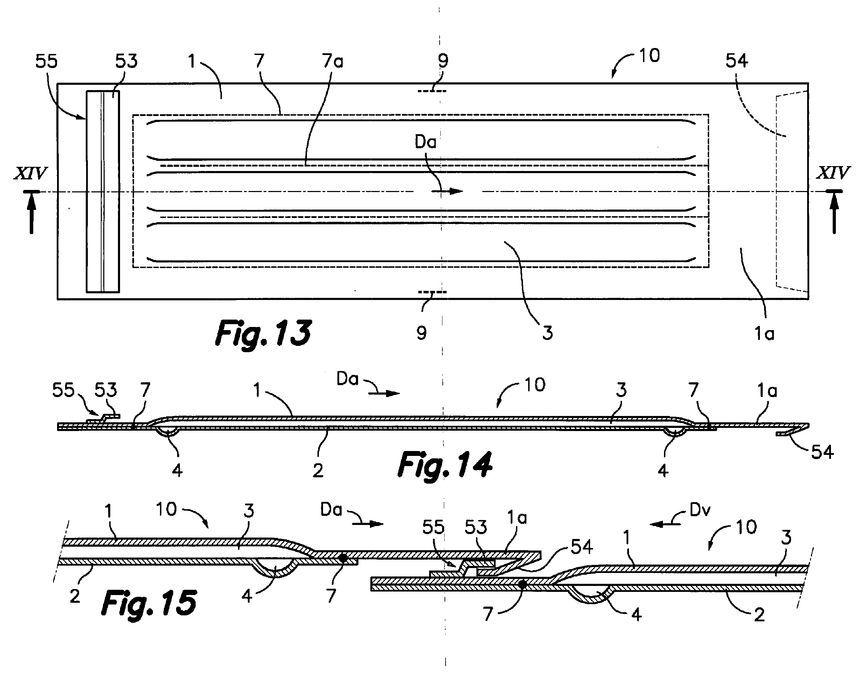

Figures 13, 14 and 15 show another embodiment of the enclosure panel including features intended to ensure the leak-tightness against rain and wind between similar panels 10 operatively assembled to form a roof or a façade. It must be indicated that, only for the sake of clarity of the drawing, the fins 13 of the outer plate 1 and the flaps 8 of the inner plate 2, as well as the transverse stiffening members 11 and the insulating material elements 12 have been omitted in Figures 13, 14 and 15. For the same reason, the thickness of the plates has been exaggerated in Figures 14 and 15.

The solar energy-collecting enclosure panel 10 shown in Figures 13 and 14 comprises, similarly to the previous embodiments, outer and inner plates 1, 2, which are mutually facing and joined by a leak-tight joint line along a closed perimeter 7 surrounding hollow conformations 3 formed in the outer plate 1 and other hollow conformations 4 formed in the inner plate 2. These hollow conformations 3, 4 are partially superimposed and communicated with one another in order to together form a circuit for a heat-carrying fluid within said closed perimeter 7. The mentioned circuit has an inlet and an outlet for the circulation of the heat-carrying fluid. The outer and inner plates 1, 2 are furthermore joined by mechanical connections 9 in expected maximum stress areas, as has been previously explained.

In this embodiment, an upper hooking configuration 53 is arranged at or close to an upstream end of the outer plate 1, in relation to the direction of a water flow, indicated by means of the arrows Da in Figures 13, 14 and 15, expected on the panel or enclosure 10, and a lower hooking configuration 54 is arranged at or close to a downstream end of the outer plate 1, in relation to the direction of the water flow Da. The mentioned upper and lower hooking configurations 53, 54 substantially cover the width of the upper plate 1 in a direction transverse to the direction of the water flow Da (Figure 13). The upper hooking configuration 53 is preferably provided by a supplementary sheet metal element 55 fixed, for example by means of welding or an adhesive, or by other mechanical joining means, to the outer surface of the outer plate 1, and the lower hooking configuration 53 is provided by an extension of the upper plate 1 folded downwardly. The upper plate 1 has, at the downstream end of the enclosure panel 10, an overlap portion 1a projecting from the lower plate 2, and at the end of which the lower hooking configuration 54 is formed.

When two enclosure panels 10 similar to those of Figures 13 and 14 are assembled to form a roof or a façade (Figure 15), the mentioned overlap portion 1a of the upstream enclosure panel 10 is arranged overlapping above a portion of the upstream end of the downstream enclosure panel 10, such that the water moving in the direction of the water flow Da passes from the upstream enclosure panel 10 to the downstream enclosure panel 10. However, and especially when there is wind blowing in a direction Dv opposite to the direction of the water flow Da, there is the risk of a water backflow penetrating between the two enclosure panels 10. To avoid this risk, the respective lower and upper hooking configurations 54, 53 of the upstream and downstream enclosure panels 10 are arranged mutually hooked (Figure 15) forming a barrier preventing the penetration of the water between the two enclosure panels 10.

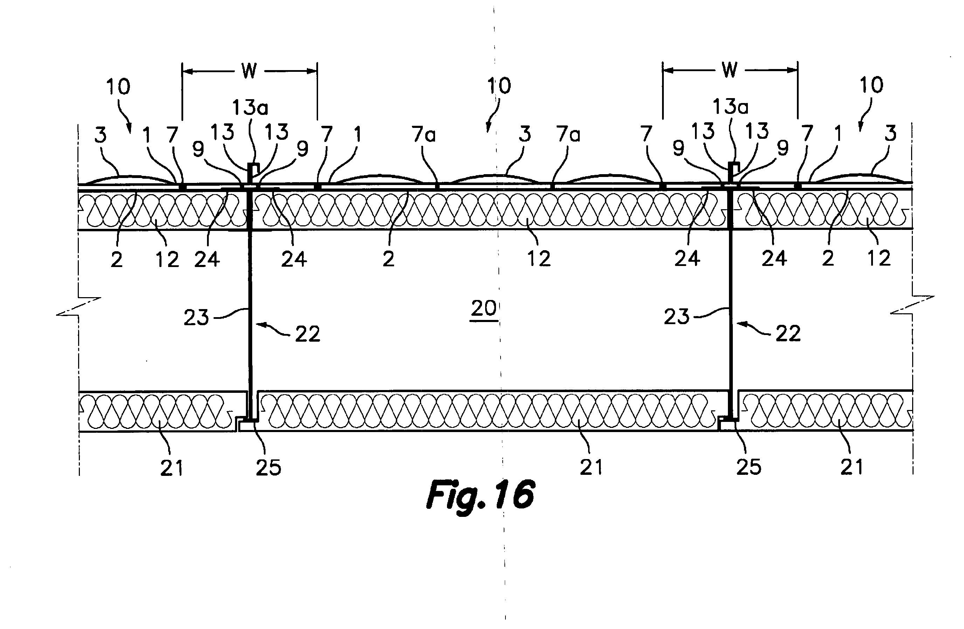

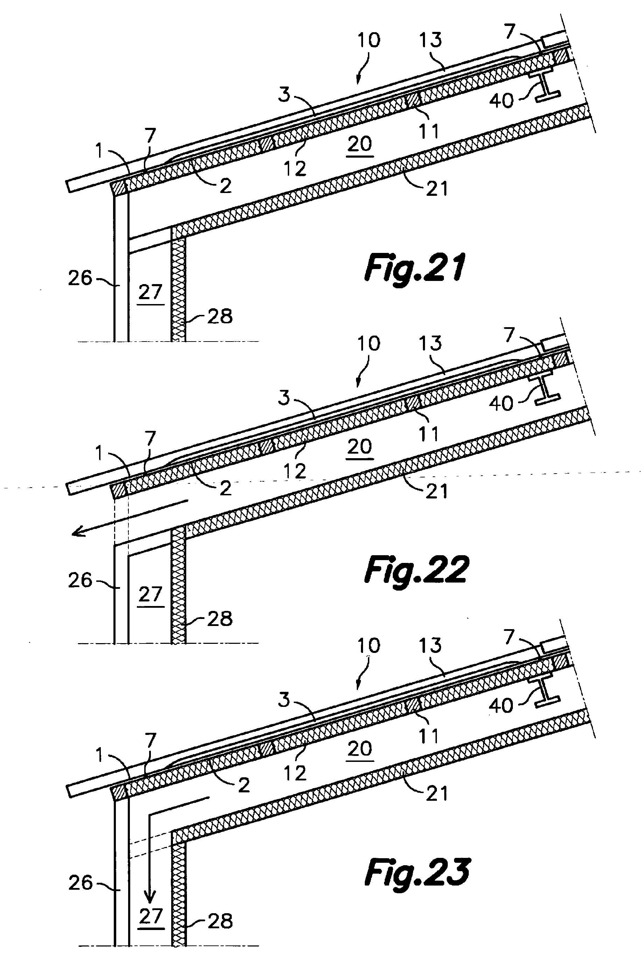

In relation now to Figure 16, a walkable solar energy-collecting roof according to one embodiment of the second aspect of the present invention is described below, which is formed by a plurality of the solar energy-collecting architectural enclosure panels 10 according to the first aspect of the present invention. The several panels 10 are mutually adjacent, supported on transverse elements 40 of a structure (shown in Figures 21 to 23) and connected to one another establishing leak-tight joints. It will be observed from Figures 3 and 4 that the upper plate 1 of the panel 10 is slightly longer than the lower plate 2 and projects at the ends in the longitudinal direction. The portion of the upper plate 1 projecting from the downstream end of a panel 10 can thus overlap the portion of the upper plate 1 projecting from the upstream end of another adjacent panel 10 in the longitudinal direction, and even this portion of the upper plate 1 projecting from the upstream end can be inserted between the two upper and lower plates 1, 2 of the first panel 10 in accordance with the separation distance between the leak-tight joint line of the closed perimeter 7 and the edges of said outer and inner plates 1, 2. In relation to the leak-tight joint between adjacent panels 10 in the transverse direction, Figure 16 shows a folded portion 13a of the fin 13 in the longitudinal edge of a panel 10 overlapping a folded portion 13a of the fin 13 in the longitudinal edge of another adjacent panel 10 in the transverse direction. The mentioned overlapped folded portions 13a can be crimped or simply covered by a covering part (not shown). Alternatively, the covering part could cover the adjacent fins 13 without needing overlapped folded portions 13a. In Figure 16 a walkable area W comprised between sections of the leaktight joint line of the closed perimeter 7 close to the longitudinal edges of two adjacent panels 10 has likewise been shown.

The roof formed by the panels 10 includes an air chamber 20 formed by a plurality of insulating boards 21 supported under the solar energy-collecting panels 10 by means of a plurality of support elements 22, each of which comprises a spacing member 23 with an upper end from which two fins 24 configured to be inserted between the outer and inner plates 1, 2 of two adjacent panels 10 extend in opposite directions, and a lower end to which a support configuration 25 configured to support two of said adjacent insulating boards 21 is joined. More specifically, the fins 24 of the support elements can be inserted in the spaces existing between the two outer and inner plates 1, 2 and between the leak-tight joint line of the closed perimeter 7 and the longitudinal edges of the panels 10, obviously in areas in which the mentioned mechanical connections 9 are not present. In an exceptional case, the roof could be formed by a single solar energy-collecting panel 10, in which case the air chamber could be formed by a single insulating board 21 supported under said panel 10 by several support elements 22, which in this case would include a single fin 24 extending laterally from the upper end of the spacing member 23 and configured to be inserted between the outer and inner plates 1, 2 of the single solar energy-collecting panel 10 in an area adjacent to one of the opposite longitudinal edges thereof, and the support configuration 25 would be configured to support the insulating board 21 on one side.

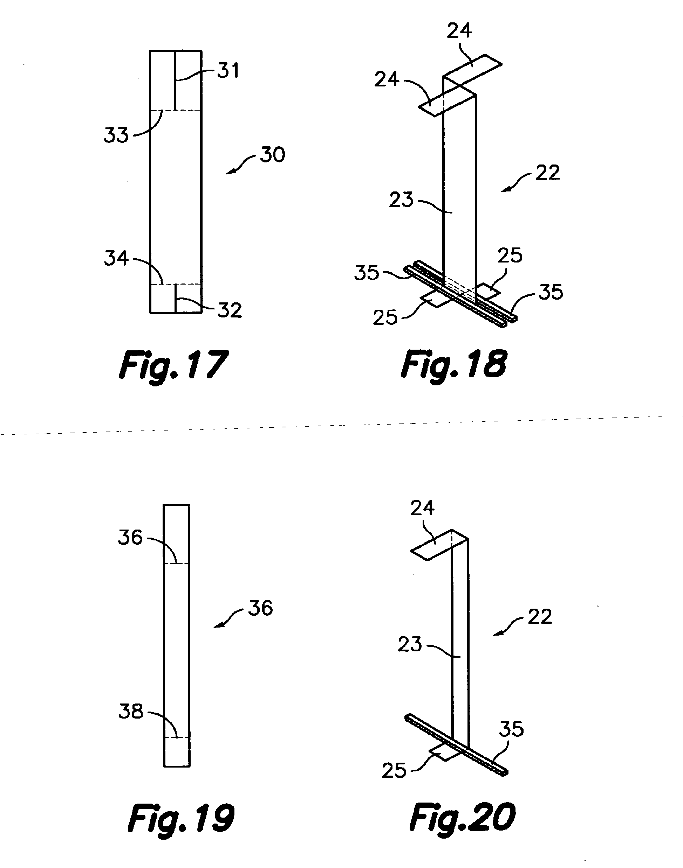

As shown in Figures 17 to 20, the support element 22 can be obtained in an easy and cost-effective manner from cut and folded sheet metal portions. In the embodiment of Figures 17 and 18, the support element 22 is obtained from a sheet metal portion 30 (Figure 17) in the form of an elongated rectangular strip provided with a first cut 31 dividing a portion close to a first end in half and a second cut 32 dividing a portion close to a second end in half. The two halves of the first end can be folded at a right angle towards opposite sides through a first fold line 33 to form the two fins 24 of the support element 22 (Figure 18) and the two halves of the second end can be folded at a right angle towards opposite sides through a second fold line 34 to form the support configuration 25 of the support element 22 configured to support two insulating boards 21 on opposite sides. The section of the sheet metal portion 30 comprised between the first and second fold lines 33, 34 forms the spacing member 23 of the support element 22. In this embodiment, support configuration 25 provides two flat bars on both sides of the spacing member 23 on which profiles 35 supporting the insulating boards 21 can be supported. In the embodiment of Figures 19 and 20, the support element 22 is also obtained from a sheet metal portion 36 (Figure 19) in the form of an elongated rectangular strip, a portion close to a first end of which can be folded through a first fold line 37 to form a single fin 24 of the support element 22 (Figure 20). A portion close to a second end of the sheet metal portion 36 can be folded through a second fold line 38 to form the support configuration 25 of the support element 22 configured to support a single insulating board 21, for example in collaboration with a profile 35. This support element 22 of the embodiment of Figures 19 and 20 is useful for a roof formed by a single panel 10 but also to support the insulating boards 21 in the panels 10 located at the side ends of a roof formed by multiple panels. Obviously, combinations between both embodiments of the support element 22 or other embodiments are possible.

Figure 21 shows an embodiment of the roof according to the second aspect of the present invention applied to a building, in which the air chamber 20 is a closed chamber acting as a heat insulator between the solar energy-collecting panels 10 and the inside of the building. In this embodiment, the structure of the building also includes a façade closure 26 and a second closed air chamber 27 formed by one or more second insulating boards 28 supported at a distance from the façade enclosure 26.

Figure 22 shows another embodiment of the roof according to the second aspect of the present invention applied to a building, in which the air chamber 20 is in communication with the outside of said building. The air chamber 20 is thus ventilated and the heated air under the panels 10 is substituted with fresh air, which increases the insulating effect of the air chamber when the intention is to maintain the inside of the building cool. The structure of the building also includes here a façade enclosure 26 and a second closed air chamber 27 formed by one or more second insulating boards 28 supported at a distance from the façade enclosure 26.

Figure 23 shows yet another embodiment of the roof according to the second aspect of the present invention applied to a building, in which the air chamber 20 is in communication with an inner heating air pipeline of the building. In this case, a second air chamber 27 formed by one or more second insulating boards 28 supported at a distance from a façade enclosure 26 of the building is used as part of the heating air pipeline. The residual heat accumulated by the air in the air chamber 20 under the solar energy-collecting panels 10 is thus used for the heating system when the intention is to maintain the inside of the building warm.

An additional embodiment of the roof (not shown) allows combining the advantages of the three embodiments described above in relation to Figures 21, 22 and 23 incorporating a system of valves and gates (not shown) which can be operated to maintain the air chamber 20 closed, to communicate the air chamber 20 with the outside of the building or to communicate the air chamber 20 with the heating air pipeline, according to the weather, the season of the year, the inner temperature of the building, etc.

A person skilled in the art will be able to carry out modifications and variations from the embodiments shown and described without departing from the scope of the present invention as it is defined in the attached claims.

## Claims

1. A solar energy-collecting architectural enclosure panel, applicable to a roof and to a façade, of the type comprising:
an outer plate (1) and an inner plate (2) which are mutually facing and joined by a leak-tight joint line along a closed perimeter (7) separated at a distance from perimetric edges of said outer and inner plates (1, 2);
one or more hollow conformations (3, 4) in at least one of said outer and inner plates (1, 2) to form between both a circuit for a heat-carrying fluid within said closed perimeter (7), said circuit having an inlet (5) and an outlet (6); and
first longitudinal stiffening configurations adjacent to opposite longitudinal edges of the outer plate (1) and second longitudinal stiffening configurations adjacent to opposite longitudinal edges of the inner plate (2) and configured to rest on transverse elements of a structure,
**characterized in that** the outer and inner plates (1, 2) are furthermore joined by at least one mechanical connection (9) in an expected maximum bending stress area adjacent to at least one of said opposite longitudinal edges of the outer and inner plates (1, 2).

2. The panel according to claim 1, **characterized in that** the outer and inner plates (1, 2) include at least one of said mechanical connections (9) in an expected maximum bending stress area adjacent to each of said opposite longitudinal edges of the outer and inner plates (1, 2).

3. The panel according to claim 1 or 2, **characterized in that** said at least one mechanical connection (9) is selected from a group including a weld point; several aligned weld points; a weld bead; several aligned short weld lines; a clinching point; several aligned clinching points; a screw and nut set connection point; several aligned screw and nut set connection points; a rivet connection point; or several aligned rivet connection points.

4. The panel according to claim 3, **characterized in that** said second longitudinal stiffening configurations comprise flaps (8) extending towards the inner side from said opposite longitudinal edges of the inner plate (2).

5. The panel according to claim 4, **characterized in that** the flaps (8) on each side of the inner plate (2) are finished in respective folded portions (8a) extending towards one another defining respective facing channels in cooperation with the flaps (8) and the inner plate (2).

6. The panel according to claim 5, **characterized in that** several elongated transverse stiffening members (11) are arranged transversely adjacent to the inner plate (2), each of said transverse stiffening members (11) having opposite ends fitted in said facing channels.

7. The panel according to claim 6, **characterized in that** a space between every two of said transverse stiffening members (11) is filled by at least one insulating material element (12) with opposite ends fitted in said facing channels.

8. The panel according to claim 6, **characterized in that** said transverse stiffening members (11) are bars of wood with a substantially rectangular cross section.

9. The panel according to claim 4, **characterized in that** said first longitudinal stiffening configurations comprise fins (13) extending towards the outer side from said opposite longitudinal edges of the outer plate (1), said fins (13) being substantially aligned with said flaps (8) on each side of the panel.

10. The panel according to any one of the previous claims, **characterized in that** between said leak-tight joint line along a closed perimeter (7) and said opposite longitudinal edges of the outer and inner plates (1, 2) there is a sufficient distance to at least place a foot.

11. The panel according to any one of the previous claims, **characterized in that** it comprises fixing configurations in the form of fins (42) projecting laterally outwards beyond the outer side limits of the flaps (8) of the inner plate (2), said fins (42) being configured for the purpose of being fixed to an element (45) of a support structure (46) by mechanical joining means.

12. The panel according to claim 11, **characterized in that** it comprises at least one elongated transverse stiffening member (41) made of sheet metal arranged transversely adjacent to the inner plate (2), and at least one of the fins (42) is integral with the sheet metal of which said transverse stiffening member (41) is made.

13. The panel according to claim 12, **characterized in that** the transverse stiffening member (41) has opposite ends respectively adjacent to and facing the flaps (8) of the inner plate (2), and at least one of the fins (42) extends from at least one of said ends of the transverse stiffening member (41) under the corresponding flap (8) of the inner plate (2).

14. The panel according to claim 13, **characterized in that** the transverse stiffening member (41) defines a C-shaped profile forming a laterally open channel (52) dimensioned to receive-and-support an end of an insulating material element (12), and the enclosure panel comprises at least two of said transverse stiffening members (41) arranged with said channels (52) facing to each other and at least one of said insulating material elements (12) with its ends inserted and supported in the facing channels (52) formed by the two transverse stiffening members (41).

15. The panel according to claim 13, **characterized in that** it comprises two end transverse stiffening members (41) and one or more intermediate transverse stiffening members (41), wherein each intermediate transverse stiffening member (41) includes at least one support configuration (43) extending in a direction opposite to the channel (52) formed by it and which is dimensioned to support an end of an insulating material element (12), wherein the channel (52) of each intermediate transverse stiffening member (41) faces the channel (52) of one of said end transverse stiffening members (41) or the channel (52) or support configuration (43) of another one of the intermediate transverse stiffening members (41) to support at least one insulating material element (12) between both, and said support configuration (43) of each intermediate transverse stiffening member (41) faces the channel (52) of one of the end transverse stiffening members (41) or the channel (52) or support configuration (43) of another one of the intermediate transverse stiffening members (41) to support at least one insulating material element (12) between both.

16. The panel according to any of claims 12 to 15, **characterized in that** the transverse stiffening member (41) including the fins (42) is a one-piece body of cut and folded sheet metal with an upper wall (41a), a side wall (41b) and a lower wall (41c), wherein the fins (42) are formed by prolongations of said lower wall (41 c) at the ends thereof.

17. The panel according to claim 15, **characterized in that** the intermediate transverse stiffening member (41) including the fins (42) is a one-piece body of cut and folded sheet metal with an upper wall (41a), a side wall (41b) and a lower wall (41c), wherein the fins (42) are formed by prolongations of said lower wall (41c) at the ends thereof, and the support configuration (43) is formed by an L-shaped profile having a side wall (43a) joined to a surface of said side wall (41 b) of the transverse stiffening member (41) opposite to the channel (52) and a lower wall (43b) substantially coplanar with the lower wall (41c) of the transverse stiffening member (41).

18. The panel according to claim 16 or 17, **characterized in that** the transverse stiffening member (41) further has end walls (4 1 d) closing the channel (52) at the ends.

19. The panel according to any one of claims 13 to 18, **characterized in that** said fin (42) is configured for the purpose of being folded upwardly and placed against an outer face of the corresponding flap (8) of the inner plate (2) in order to facilitate the packaging and transport of the enclosure panel, and of being unfolded to an operating position when the fin (42) needs to be used.

20. The panel according to any one of claims 12 to 19, **characterized in that** the transverse stiffening member (41) is fixed to the inner plate (2) by a mechanical connection.

21. The panel according to any one of claims 11 to 20, **characterized in that** the fin (42) includes at least one hole (46).

22. The panel according to any one of the previous claims, **characterized in that** an upper hooking configuration (53) is arranged at or close to an upstream end of the outer plate (1) in relation to the direction of an expected water flow (Da), and a lower hooking configuration (54) is arranged at or close to a downstream end of the outer plate (1) in relation to the direction of said water flow (Da), said upper and lower hooking configurations (53, 54) substantially covering the width of the outer plate (1) in a direction transverse to the direction of the water flow (Da), the respective lower and upper hooking configurations (54, 53) of two enclosure panels (10) assembled to form a roof or a façade being arranged mutually hooked forming a barrier to prevent a water backflow between the two enclosure panels (10).

23. A walkable solar energy-collecting roof formed by at least one solar energy-collecting architectural enclosure panel (10) according to any one of claims 1 to 10 supported on transverse elements of a structure, **characterized in that** it includes an air chamber (20) formed by at least one insulating board (21) supported under said solar energy-collecting architectural enclosure panel (10) by at least one support element (22) comprising a spacing member (23) with an upper end from which there extends laterally at least one fin (24) configured to be inserted between the outer and inner plates (1, 2) of the solar energy-collecting architectural enclosure panel (10) in an area adjacent to one of the opposite longitudinal edges thereof, and a lower end to which a support configuration (25) configured to support said insulating board (21) is joined.

24. The roof according to claim 23, **characterized in that** it comprises a plurality of said solar energy-collecting architectural enclosure panels (10), which are mutually adjacent, supported on said transverse elements of said structure and connected to one another establishing leak-tight joints, and **in that** said support element (22) comprises two of said fins (24) extending in opposite directions from the upper end of said spacing member (23) and configured to be inserted between the outer and inner plates (1, 2) of two adjacent solar energy-collecting architectural enclosure panels (10).

25. The roof according to claim 24, **characterized in that** it comprises a plurality of said insulating boards (21) supported under said solar energy-collecting architectural enclosure panels (10) by a plurality of said support elements (22), wherein said support configuration (25) of each support element (22) is configured to support two of said adjacent insulating boards (21).

26. The roof according to claim 23, 24 or 25, **characterized in that** said air chamber (20) is a closed chamber.

27. The roof according to claim 23, 24 or 25, **characterized in that** said structure is the structure of a building and said air chamber (20) is in communication with the outside of said building.

28. The roof, according to claim 23, 24 or 25, **characterized in that** said structure is the structure of a building and said air chamber (20) is in communication with an inner heating air pipeline of said building.
